# EUROPÄISCHE PATENTSCHRIFT

(11) **EP 2 195 223 B1**
(45) Veröffentlichungstag und Bekanntmachung des Hinweises auf die Patenterteilung: **29.05.2013**
(21) Anmeldenummer: 08801764.5
(22) Anmeldetag: 29.08.2008
(51) Int. Cl.: B62D 5/04, F16C 23/08, F16C 27/04

(54) **KUGELGEWINDETRIEB MIT ANGEFEDERTEM LAGER**
BALL SCREW DRIVE HAVING A SPRING-LOADED BEARING
TRANSMISSION FILETÉE À BILLES À SUPPORT ÉLASTIQUE

(30) Priorität: 05.10.2007 DE 102007048075
(43) Veröffentlichungstag der Anmeldung: 16.06.2010
(73) Patentinhaber: ThyssenKrupp Presta Aktiengesellschaft, 9492 Eschen (LI)
(72) Erfinder: KENEZ, Peter, H-1089 Budapest (HU); RATH, Krisztian, H-1039 Budapest (HU); KIFORIUK, Alexander, 73061 Ebersbach an der Fils (DE); ROMBOLD, Manfred, 71364 Winnenden (DE)
(74) Vertreter: Lenzing Gerber Stute
(86) Internationale Anmeldenummer: PCT/EP2008/007086
(87) Internationale Veröffentlichungsnummer: WO 2009/046792

(56) Entgegenhaltungen:
- GB-A- 2 006 343
- GB-A- 2 388 352
- US-A- 2 506 404
- US-A1- 2003 121 714

## Beschreibung

### Technisches Gebiet

Die vorliegende Erfindung betrifft eine elektrische Kraftfahrzeugservolenkung mit einem Kugelumlaufgetriebe mit den Merkmalen des Oberbegriffs des Anspruchs 1. Eine solche lenkung ist aus der US2003/012174 A1 bekannt.

### Stand der Technik

Eine weitere vorrichtung ist aus der DE 102005017883 A1 bekannt.

Die Druckschrift beschreibt eine Kraftfahrzeugservolenkung mit einem Lenkgetriebe, in dem eine Zahnstange zum Antrieb von verschwenkbaren gelenkten Rädern eines Kraftfahrzeugs in einem Lenkungsgehäuse in Axialrichtung der Zahnstange verlagerbar ist. Eine Lenksäule ist über ein Lenkritzel und eine entsprechende Verzahnung angebunden. Eine Lenkhilfskraft wird von einem Elektromotor aufgebracht, der auf eine Kugelmutter eines Kugelgewindetriebs wirkt. Die Kugelmutter steht über umlaufende Kugeln mit einem Kugelgewinde in Eingriff, welches neben der Ritzelverzahnung der Zahnstange am äußeren Umfang der Zahnstange angeordnet ist. Eine Drehung der Kugelmutter bewirkt dann eine axiale Verlagerung der Zahnstange, wodurch die Lenkbewegung des Fahrers unterstützt wird. Bei der Schrift ist vorgesehen, den Kugelge-windetrieb über einen Zahnriemen mit dem Elektromotor zu koppeln.

Die Kugelmutter ist in einem radial und axial abschützenden Kugellager in dem Lenkungsgehäuse drehbar gelagert. Dabei wirken von außen insgesamt wenigstens 3 Einflüsse auf die Lagerung ein, nämlich einmal die auf die Zahnstange wirkenden Axialkräfte, die durch außerhalb der Achse liegende Krafteinleitungen erzeugten Kippmomente der Zahnstange, sowie Temperatureinflüsse.

Die reinen Axialkräfte bewirken einen ebensolche axiale Kraft auf das Lager, die durch den Lagersitz aufgefangen werden muss. Die Kippmomente bewirken eine Kippung des Lagers im Lagersitz, die ebenfalls aufgefangen werden muss. Die Temperaturunterschiede im Betrieb bewirken auf Grund der unterschiedlichen Wärmeausdehnungskoeffizienten der Lagerschalen und des Lenkungsgehäuses eine Bildung von Spalten im Bereich des Lagersitzes, wenn das Lager unmittelbar in das Lenkgehäuse eingebaut ist.

Um diese drei Einflüsse ohne Nachteil für den Kugelumlauf auffangen zu können, ist in der Druckschrift eine Gummilagerung vorgeschlagen worden, bei der das Kugellager der Kugelmutter in Axialrichtung und in Radialrichtung in Gummi gegenüber dem Lenkungsgehäuse gefasst ist.

Die Fassung des Lagers in Gummi ist jedoch aufwändig und teuer. Außerdem altert der Werkstoff Gummi, wie auch andere Elastomere, so dass über die Fahrzeuglebensdauer eine Veränderung der Eigenschaften, wenn nicht gar ein Defekt, eintreten kann.

Die DE 10 2004 034 701 A1 zeigt weiter verschiedene Ausführungsformen von Wälzlagern, das im Bereich des Außenrings mit Federelementen oder Dämpfungselementen versehen ist, um Schwenkbewegungen zu ermöglichen.

Aus der DE 602 11 965T2 ist eine elektrische Servolenkung mit einem Kugelumlauf bekannt, bei der der Kugelumlauf über ein Kegelradgetriebe angetrieben wird. Eine Tellerfeder ist zwischen dem Lenkungsgehäuse und dem Wälzlager des Kugelumlaufs angeordnet, um den Kugelumlauf in Richtung des Eingriffs des Kegelradgetriebes vorzuspannen. Das Wälzlager und der Kugclumlauf werden durch die Tellerfeder von dem Lagersitz weg gedrängt. Das Lager kann axiale Bewegungen ausführen, aber weder radiale Bewegungen noch Kippbewegungen.

Schließlich zeigt die EP 1410974 B1 in der Fig. 5 eine elektrische Servolenkung mit einer Kugelumlauf. Das Wälzlager des Kugelumlaufs sitzt in einem Lagersitz des Lenkungsgehäuses. Es wird über eine Tellerfeder in den Lagersitz vorgespannt. Das Wälzlager weist kein Radialspiel in dem Lagersitz auf. Es ist deshalb nicht radial beweglich und nicht kippbar.

Gegenüber diesem Stand der Technik ist es Aufgabe der vorliegenden Erfindung, eine Servolenkung mit Kugelumlauf zu schaffen, bei der das Lager der Kugelmutter derart befestigt ist, dass Kippmomente und Wärmeausdehnung aufgefangen werden können, aber eine Befestigung erzielt wird, wobei die oben genannten Nachteile zumindest teilweise beseitigt sind.

Diese Aufgabe wird von einer Servolenkung mit den Merkmalen des Anspruchs 1 gelöst.

Weil bei einer erfindungsgemäßen servolenkung vorgesehen ist, dass das elastische Haltemittel eine Tellerfeder ist, ist eine Bewegung des Lagers unter Belastungsspitzen möglich, während es unter Normalbedingungen festgelegt ist. Die Tellerfeder ist zudem preiswert und dauerhaft.

Da weiter die Tellerfeder als ringförmige, konische Teller-feder ausgebildet ist und mit ihrem kleinen Durchmesser an einer Stirnfläche des Außenrings anliegt, ist eine rundum gleichmäßige Krafteinleitung gewährleistet, was einem Verzug des Lageraußenrings vorbeugt. Gleiches gilt, wenn der Außenring mit der der Tellerfeder abgewandten Stirnfläche an einer Anlagefläche des Lenkungsgehäuses anliegt.

Das Auftreten thermischer Spannungen zwischen dem Leichtmetallgehäuse und dem Stahllagerring wird verhindert, wenn der Außenring in einen Sitz mit einem Radialspiel gegenüber dem Lenkungsgehäuse eingesetzt ist. Die Teller-feder wird so ausgelegt, dass sie den Außenring durch eine Anpresskraft auf die Anlagefläche so stark anpresst, dass der erzeugte Reibschluss den Außenring in seinem Sitz in Radialrichtung unter Betriebsbedingungen unbeweglich fixiert. Es ist dabei von besonderem Vorteil, dass radial zwischen dem Außenring des Lagers und dem Gehäuse keinerlei federnde oder elastische Elemente angeordnet sind.

Spitzenbelastungen werden zur Vermeidung von Beschädigungen des Getriebes in verschiedenen Lastrichtungen aufgefangen, wenn der Außenring aufgrund von Stoßbelastungen entgegen der Federkraft der Tellerfeder kurzzeitig und reversibel in seinem Sitz in Radialrichtung und/oder in Axialrichtung verlagerbar und/oder kippbar ist.

Eine einfache und konstruktiv genau definierte Vorspannung wird erzeugt, wenn die Tellerfeder mit ihrem äußeren Umfang an einem Ringbund eines Gehäusegrundkörpers anliegt, der Außenring in einem Sitz eines Gehäuseendstücks sitzt, und die Tellerfeder in dem Zwischenraum durch die Befestigung des Gehäuseendstücks mittels Befestigungsschrauben an dem Grundkörper vorgespannt wird.

Nachfolgend wird ein Ausführungsbeispiel der vorliegenden Erfindung anhand der Zeichnung beschrieben. Es zeigen:
- Fig. 1:: eine elektrische Servolenkung mit einem riemengetriebenen Kugelumlauf in einer perspektivischen Darstellung;
- Fig. 2:: den Kugelumlauf aus Fig. 1 in einem Längsschnitt; sowie
- Fig. 3 -5:: ein an Stelle der Tellerfeder einsetzbares Federelement.

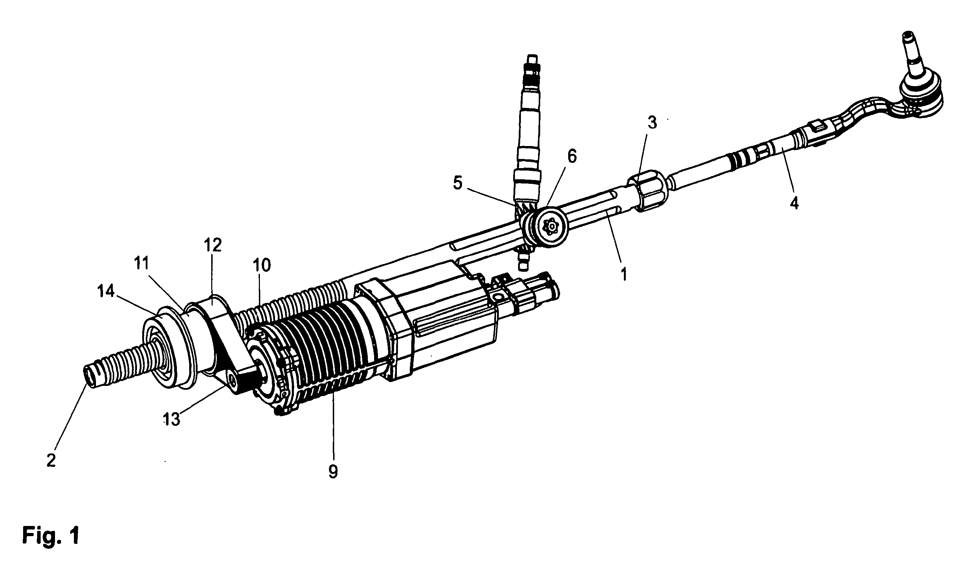

In der Fig. 1 ist der interne Aufbau einer elektrischen Kraftfahrzeugservolenkung perspektivisch veranschaulicht. Das Lenkungsgehäuse ist in dieser Darstellung nicht enthalten.

Die Lenkung umfasst eine Zahnstange 1, die sich von einem ersten Anschluss 2 für ein Kugelgelenk zu einem zweiten Anschluss 3 für ein entsprechendes Kugelgelenk erstreckt. Die Kugelgelenke sind die inneren Spurstangengelenke von Spurstangen 4, die wiederum mit den Achsschenkeln lenkbarer Räder verbunden sind. Eine Verlagerung der Zahnstange 1 in ihrer Axialrichtung bewirkt eine Verschwenkung der Räder.

Die Zahnstange 1 weist einen ersten nicht sichtbaren Verzahnungsbereich auf, der mit einem Ritzel (=Lenkritzel) 5 hemmt. Ein Druckstück 6 bewirkt einen spielfreien Eingriff der Zahnstange 1 in das Ritzel 5. Diese Verzahnung dient zur manuellen Betätigung der Lenkung durch Drehung eines mit dem Ritzel 5 drehfest verbundenen Lenkrades.

Neben der Verzahnung, in die das Ritzel 5 eingreift, ist die Zahnstange mit einem Kugelgewinde 10 versehen, das Teil eines Kugelgewindetriebs ist, der weiter eine Kugelmutter 11 mit darin angeordneten umlaufenden Kugeln umfasst. Der Kugelumlauf 11 wird an seiner Umfangsseite von einem Zahnriemen 12 formschlüssig erfasst. Dieser Zahnriemen 12 wiederum steht über ein Ritzel 13 mit einem Antriebsmotor oder Servomotor 9 in Verbindung. Die Kugelmutter 11 ist wiederum mit einem Kugellager 14 in dem nicht dargestellten Lenkungsgehäuse drehbar und axial fest gelagert.

In an sich bekannter Weise wird der Servomotor 9 über ein aus dem Drehmoment in der Lenksäule abgeleitetes Signal zur Unterstützung der Lenkbewegung angesteuert. Der Servomotor 9 wird in Drehung versetzt und treibt über das Ritzel 13, den Riemen 12 und die Kugelmutter 11 schließlich die Zahnstange 1 an. Das erforderliche Handdrehmoment am Lenkrad wird reduziert.

Andererseits gelangen auch Rückstellkräfte des Fahrwerks und Fahrbahneinflüsse sowie äußere Störeinwirkungen über die Spurstangen 4 und die inneren Spurstangengelenke 3 auf Zahnstange 1, die diese Belastungen an die jeweiligen Antriebe weiter gibt. Da die Spurstangen 4 auf Grund der sich ändernden Lenkgeometrie bei Lenkbewegungen nicht immer exakt achsparallel zu der Zahnstange 1 ausgerichtet sind, werden nicht nur axiale Kräfte in die Zahnstange 1 eingeleitet, sondern auch radiale Kräfte.

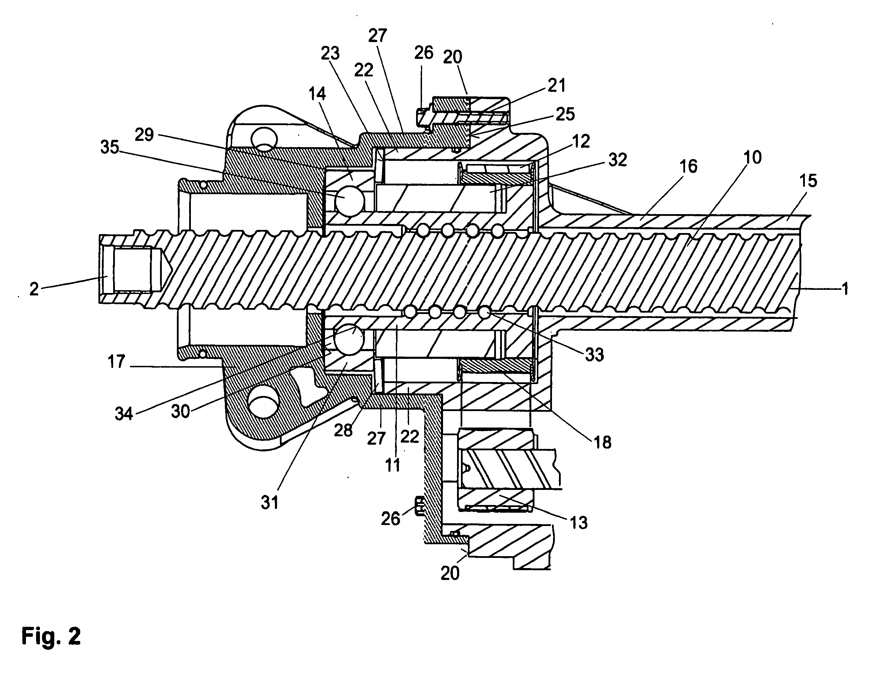

Die Fig. 2 zeigt den Kugelgewindetrieb, der in Fig. 1 dargestellten Lenkung in einer vergrößerten Schnittdarstellung. Gleiche Bauelemente tragen gleiche Bezugsziffern. In dieser Darstellung ist auch ein mehrteiliges Lenkungsgehäuse 15 mit einem Grundkörper 16 und einem Endstück 17 dargestellt. Der Grundkörper 16 umgibt die Zahnstange 1 nahezu auf ihrer gesamten Baulänge und trägt in dem nicht dargestellten Bereich auch das Ritzel 5 und das Druckstück 6. Im Bereich des Kugelgewindetriebs ist der Grundkörper 16 des Lenkungsgehäuses 15 so ausgebildet, dass er die Kugelmutter 11, eine Riemenscheibe 18, den Zahnriemen 12 und das Ritzel 13 umgibt. Der Grundkörper 16 bildet eine ebene Flanschfläche 20 aus, die zumindest abschnittweise parallel zu einer Ebene verläuft, die radial zur Zahnstange 1 orientiert ist. Die Flanschfläche 20 dient als Anlagefläche für das Endstück 17 des Gehäuses. Sie ist von Gewindebohrungen 21 durchsetzt. Innerhalb der Flanschfläche 20 erstreckt sich zu dem freien Ende des Grundkörpers 16 hin ein ringförmiger Bund 22. Der Bund 22 ist im wesentlichen zylindrisch und rohrförmig ausgebildet und schließt einstückig im rechten Winkel an die Flanschfläche 20 an. Der Bund 22 trägt an seinem freien Ende eine stirnseitige, ringförmige Fläche 23, die wiederum im rechten Winkel zu dem Bund 22 und damit parallel zu der Flanschfläche 20 ausgerichtet ist.

Das Endstück 17 ist so ausgebildet, dass es den Grundkörper 16 zu dem freien Ende der Zahnstange 1 hin im Wesentlichen verschließt und dabei den Kugelgewindetrieb nach außen umgibt und kapselt. Dazu ist das Endstück 17 mit einer zu der Flanschfläche 20 des Grundkörpers 16 kompatiblen Flanschfläche 25 ausgestattet, die im montierten Zustand gemäß Fig. 2 an der Flanschfläche 20 anliegt. Gewindeschrauben 26 sichern das Endstück 17 im Bereich der Kontaktfläche an dem Grundkörper 16. ein Gehäusebereich 27 umgibt den Bund 22 nach außen hin. Die Stirnfläche 23 des Bundes 22 wird von dem Endstück 17 unter Einhaltung eines Abstandes übergriffen. In diesem Abstand liegt mit einem axialen Spiel eine Tellerfeder 28 ein. Im weiteren Verlauf ist der innere Querschnitt des Endstücks 17 weiter reduziert und bildet einen Lagersitz 29 für das Kugellager 14 der Kugelmutter 11 in Form einer inneren zylindrischen Umfangsfläche aus. An den Sitz 29 schließt eine radial orientierte Anlagefläche 30 an, an der das Kugellager 14 mit einem Außenring 31 flächig anliegt.

Zu dem Anschluss 2 für das andere Spurstangengelenk hin erweitert sich dann das Endstück 17 in bekannter Weise, um einen Anschlussbereich für einen Faltenbalg zu bilden, der das innere Spurstangengelenk umgibt und das Lenkgetriebe damit nach außen hin vollständig verschließt.

Der Kugelumlauf selbst umfasst neben dem Kugelgewinde 10 und der Kugelmutter 11 auch eine Kugelrückführung 32, die drehfest mit der Kugelmutter 11 verbunden ist. Zwischen der Kugelmutter 11 und dem Kugelgewinde 10 sind zudem Wälzkörper 33 angeordnet, die für eine spielfreie und reibungsarme Kraftübertragung in bekannter Weise vorgesehen sind.

Die Kugelmutter 11 weist an ihrem der Innenscheibe 18 gegenüberliegenden Ende eine eingearbeitete Lauffläche 34 für Wälzkörper 35 des Kugellagers 14 auf. Das Kugellager 14 ist axial von dem eigentlichen Kugelumlauf, von dem Ort der Wälzkörper 33, beabstandet.

Zur Montage dieses Bereichs der erfindungsgemäßen Servolenkung wird zunächst der Kugelumlauf mit seinen Antriebselementen auf der Zahnstange 1 und in dem Grundkörper 16 des Lenkungsgehäuses montiert. Das Kugellager 14 und die Tellerfeder 28 werden in das Endstück 17 des Lenkungsgehäuses 15 eingesetzt. Die Tellerfeder ist leicht kegelförmig ausgebildet und so orientiert, dass sie mit ihrem dem inneren Durchmesser benachbarten Randbereich dem Außenring 31 des Lagers 14 zugewandt ist, während der überstehende Randbereich des größeren Durchmessers von dem Lager 14 wegweist.

Bei der Weiteren Montage wird dann das Endstück 17 auf den ringförmigen Bund 22 aufgesetzt, bis die Flanschflächen 20 und 25 nahezu an einander anliegen. Die Tellerfeder 28 ist nun einerseits in Kontakt mit dem Lager 14 und andererseits in Kontakt mit der Stirnfläche 23 des Bundes 22.

Nun werden die Gewindeschrauben 26 durch die Durchgangsbohrungen des Endstücks 17 geführt und in die Gewindebohrungen 21 des Grundkörpers 16 eingeschraubt. Die Gewindeschrauben 26 werden mit einem Drehmoment angezogen, das ausreichend ist, um die beiden Gehäusebauteile 16 und 17 im Bereich der Flanschflächen 20 und 25 fest an einander anliegen zu lassen. Der Zwischenraum, in dem die Tellerfeder 28 liegt, wird dadurch verkleinert. Es entsteht eine Kraft auf die Tellerfeder in Axialrichtung der Anordnung durch den Druck der Stirnfläche 23 auf den äußeren Rand der Tellerfeder und die Reaktionskraft des äußeren Lagerrings 31 auf den inneren Rand der Tellerfeder. Durch die resultierende Federkraft wird das Lager 14 in seinem Lagersitz und insbesondere durch Anlage an die Anlagefläche 30 gesichert.

Im Betrieb sind bestimmte Axialkräfte über die Spurstangen 4 auf die Zahnstange 1 zu erwarten. Bei einer Servolenkung für mittelgroße PKW wird mit Kräften im Bereich von 14 - 16 kN gerechnet. Die Spannkraft der Tellerfeder soll deshalb über 16 kN liegen, um eine Bewegung des Lagers in Axialrichtung im normalen Betrieb zu vermeiden. Je nach Anforderung kann jedoch auch eine andere Spannkraft vorgesehen und eingestellt werden.

Das Lager 14 sitzt mit einem Radialspiel in dem Lagersitz 29. Während die Passung so ausgelegt ist, dass sie bei den niedrigsten zu erwartenden Temperaturen gerade zu Null wird, ist bei der höchsten zu erwartenden Betriebstemperatur ein Spalt von etwa 0,05 mm zu erwarten. Im Betrieb ist zu verhindern, dass das Lager in dem Lagersitz 29 in Radialrichtung beweglich ist. Dies wird wirksam dadurch verhindert, dass der Außenring 31 an der Anlagefläche 30 mit einem Reibwert µ=0,1 anliegt. Die Spannkraft der Tellerfeder von mehr als 16 kN bewirkt in Verbindung mit diesem Reibwert eine Festlegung des Lagers 14 bis zu einer Radialkraft von 1,6 kN. Dies ist im Normalbetrieb ausreichend, um eine Bewegung des Lagers zu unterbinden.

Diese Anordnung ist also geeignet, mit relativ einfachen Bauelementen eine Lagerung der Kugelmutter so zu gestalten, dass weder Axialkräfte noch Radialkräfte im normalen Betrieb in der Lage sind, das Lager in seinem Lagersitz 29 zu bewegen, auch wenn ein Spalt zwischen dem Lageraußenring und dem Lagersitz aufgrund thermischer Einflüsse entstanden ist. Diese technische Lösung ist aufgrund der verwendeten Bauelemente im Betrieb zuverlässig und dauerhaft. Änderungen der mechanischen Eigenschaften sind über die Betriebsdauer einer solchen Servolenkung nicht zu erwarten.

Weiter ist diese Ausführungsform geeignet, auch außergewöhnliche Belastungen aufzunehmen. So bewirken Stöße oder Schläge auf die Zahnstange 1 Kräfte mit Komponenten in Axialrichtung ebenso wie in Radialrichtung. Bei solchen Stößen, die die oben beschriebenen Kraftwerte in den beiden Richtungen überschreiten können, kann sich das Lager 14 aufgrund des Radialspiels und entgegen der Federkraft der Tellerfeder 28 in geringem Maß bewegen. Die Bewegung kann insbesondere auch in einer Kippung des Lagers innerhalb des Lagersitzes 29 bestehen. Die Spitzen der eingeleiteten Kraft werden dadurch abgefedert und die Gefahr von Schäden an den Lenkungskomponenten wird herabgesetzt. Solche Schäden können zum Beispiel durch punktuelle Überlastung der Laufflächen der Wälzkörper 33 im Kugelumlauf entstehen, die dann im weiteren Betrieb zu Reibung, Geräuschbildung und schließlich zum Ausfall des Kugelumlaufs führen könnten. Auch die Gefahr von Rissbildung im Lenkungsgehäuse 15 wird herabgesetzt.

Nach Beendigung der außergewöhnlichen Krafteinwirkung drückt die Tellerfeder 28 den Außenring 31 des Lagers 14 wieder in die vorgesehene Position. Aufgrund der Eigenschaften der Tellerfeder 28 ist dieser Vorgang ohne Einfluss auf die Federkraft oder die Lebensdauer der Tellerfeder 28.

Die erfindungsgemäße Vorrichtung ist auch für Steer-by-wire-Lenkungen einsetzbar, bei denen keine mechanische Verbindung zwischen dem Lenkrad und den gelenkten Rädern besteht. In derartigen Fällen kann der Eingriff des Ritzels 5 in die Verzahnung der Zahnstange 1 fehlen. Entsprechend ist vom Begriff Zahnstange im Sinne der Erfindung auch eine Stange zum Antreiben der Spurstangen 4 zu verstehen, die zwar ein Kugelgewinde, jedoch keine Verzahnung zum Eingriff des Lenkritzels 5 aufweist.

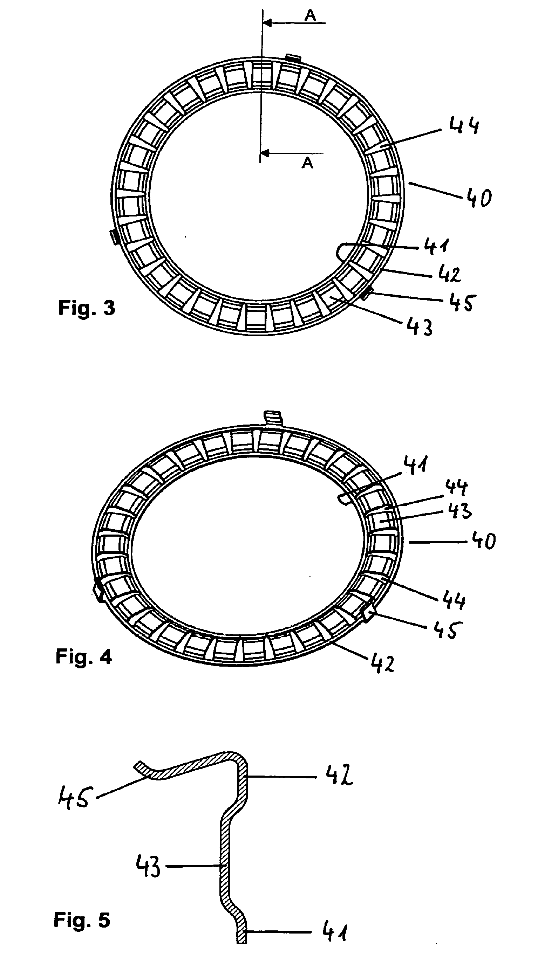

Die Fig. 3 bis 5 zeigen schließlich eine alternatives Feder 40, die sich durch eine besonders geeignete Kennlinie auszeichnet, in verschiedenen Ansichten. Die Feder 40 ist ringförmig ausgebildet und weist einen Innenring 41 und einen Außenring 42 auf. Zwischen dem Innenring 41 und dem Außenring 42 erstrecken sich brückenartige Federelemente 43. Die brückenartigen Federelemente 43 sind einstückig mit dem Innenring 41 und dem Außenring 42. In Umfangsrichtung der Feder 40 sind je zwei benachbarte Federelemente 43 durch eine Ausnehmung 44 voneinander beabstandet. Laschen 45 dienen nur zur besseren Handhabbarkeit der Feder 40 beim Einbau.

Die Feder 40 ist so ausgebildet, dass der Innenring 41 und der Außenring 42 in einer gemeinsamen Ebene liegen und dass sich die brückenartigen Federelemente 43 über diese Ebene hinaus erheben. Beim Einbau liegen dann vorzugsweise der Innenring 41 und der Außenring 42 an der dem Wälzlager 14 zugewandten Stirnfläche 23 des Lenkungsgehäuses an, während die brückenartigen Federelemente 43 an dem Lageraußenring 31 des Kugellagers 14 anliegen. Die Ausbildung der Stirnfläche 23 muss entsprechend angepasst werde.

Die Feder 40 ist aus einem Federstahl gefertigt und zeichnet sich durch eine Kennlinie aus, die zunächst in einem Ansprechbereich eine hohe Federrate aufweist, während in einem Arbeitsbereich die Federrate konstant ist. Für den Kraft/Weg-Verlauf bedeutet dies, dass zunächst über einen Hub von beispielsweise 0,1 mm die Federkraft ansteigt und dann über einen weiteren Hub von 0,1 mm - 0,6 mm die Federkraft etwa konstant bleibt. Die steigende, progressive Federkennung einer Tellerfeder weist dem gegenüber eine mit dem Arbeitshub kontinuierlich steigende Federkraft auf.

### Bezugszeichenliste

| | |
|---|---|
| 1. | Zahnstange |
| 2. | Anschluss |
| 3. | Spurstangengelenk |
| 4. | Spurstange |
| 5. | Ritzel |
| 6. | Druckstück |
| 9. | Antriebsmotor |
| 10. | Kugelgewinde |
| 11. | Kugelmutter |
| 12. | Zahnriemen |
| 13. | Ritzel |
| 14. | Kugellager |
| 15. | Lenkungsgehäuse |
| 16. | Grundkörper |
| 17. | Endstück |
| 18. | Riemenscheibe |
| 20. | Flanschfläche |
| 21. | Gewindebohrung |
| 22. | ringförmiger Bund |
| 23. | Stirnfläche |
| 25. | kompatible Flanschfläche |
| 26. | Gewindeschrauben |
| 27. | Gehäusebereich |
| 28. | Tellerfeder |
| 29. | Lagersitz |
| 30. | Anlagefläche |
| 31. | Außenring |
| 32. | Kugelrückführung |
| 33. | Wälzkörper |
| 34. | Lauffläche |
| 35. | Wälzkörper |
| 40. | Feder |
| 41. | Innenring |
| 42. | Außenring |
| 43. | Federelement |
| 44. | Ausnehmung |
| 45. | Lasche |

## Patentansprüche

1. Elektrische Servolenkung für Kraftfahrzeuge, mit einem elektrischen Antriebsmotor (9), der mittels eines Kugelumlaufgetriebes zur Erzeugung einer Linearkraft mit einer in einer Axialrichtung bewegbaren Zahnstange (1) gekoppelt ist, wobei der Kugelumlauf eine Kugelmutter (11) aufweist, die in einem Wälzlager (14) drehbar in einem Lenkungsgehäuse (15) gelagert ist, und wobei das Wälzlager (14) einen Außenring (31) aufweist, der mit einem elastischen Haltemittel beweglich in dem Lenkungsgehäuse (15) befestigt ist, wobei das elastische Haltemittel ein ringförmiges Federelement (28, 40) ist, **dadurch gekennzeichnet, dass** das Federelement (28) als ringförmige, konische Tellerfeder ausgebildet ist und mit ihrem kleinen Durchmesser an einer Stirnfläche des Außenrings (31) anliegt und dass das Federelement (28, 40) den Außenring (31) durch eine Anpresskraft auf die Anlagefläche so stark anpresst, dass der erzeugte Reibschluss den Außenring (31) in seinem Sitz (29) in Radialrichtung unter Betriebsbedingungen unbeweglich fixiert.

2. Servolenkung nach Anspruch 1, **dadurch gekennzeichnet, dass** der Außenring (31) mit der dem Federelement (28, 40) abgewandten Stirnfläche an einer Anlagefläche (23) des Lenkungsgehäuses (15) anliegt.

3. Servolenkung nach einem der vorhergehenden Ansprüche, **dadurch gekennzeichnet, dass** der Außenring (31) in einen Sitz (29) mit einem Radialspiel gegenüber dem Lenkungsgehäuse (15) eingesetzt ist.

4. Servolenkung nach einem der vorhergehenden Ansprüche, **dadurch gekennzeichnet, dass** der Außenring (31) aufgrund von Stoßbelastungen entgegen der Federkraft des Federelements (28, 40) kurzzeitig und reversibel in seinem Sitz in Radialrichtung und/oder in Axialrichtung verlagerbar und/oder kippbar ist.

5. Servolenkung nach einem der vorhergehenden Ansprüche, **dadurch gekennzeichnet, dass** das Federelement (28, 40) mit seinem äußeren Umfang an einem Ringbund (23) eines Gehäusegrundkörpers (16) anliegt, der Außenring (31) in einem Sitz (29) eines Gehäuseendstücks (17) sitzt, und dass das Federelement (28, 40) durch die Befestigung des Gehäuseendstücks (17) an dem Grundkörper (16) vorgespannt wird.

## Claims

1. Electric power steering system for motor vehicles, having an electric drive motor (9), which is coupled to a steering rack (1), movable in an axial direction, by means of a recirculating ball gear to generate a linear force, the recirculating ball system comprising a ball nut (11), which is rotatably mounted in a roller bearing (14) in a steering system housing (15) and the roller bearing (14) comprising an outer ring (31), which is moveably secured in the steering system housing (15) with a resilient retaining means, the resilient retaining means being an annular spring element (28, 40), **characterised in that** the spring element (28) is designed as an annular, conical plate spring and bears with its small diameter on an end surface of the outer ring (31) and **in that** the spring element (28, 40) presses the outer ring (31) by means of a pressing force against the bearing surface in such a forceful manner that the frictional resistance generated fixes the outer ring (31) in its seat (29) in the radial direction so as to be unmoveable under operating conditions.

2. Power steering system according to Claim 1, **characterised in that** the outer ring (31) bears with the end surface facing away from the spring element (28, 40) on a bearing surface (23) of the steering system housing (15).

3. Power steering system according to any one of the preceding claims, **characterised in that** the outer ring (31) is inserted into a seat (29) with a radial clearance with respect to the steering system housing (15).

4. Power steering system according to any one of the preceding claims, **characterised in that** the outer ring (31), owing to impact loads against the spring force of the spring element (28, 40), is temporarily and reversibly displaceable and/or tiltable in its seat in the radial direction and/or in the axial direction.

5. Power steering according to any one of the preceding claims, **characterised in that** the spring element (28, 40) bears with its outer extent on a bundled coil (23) of a housing main body (16), the outer ring (31) sits in a seat (29) of a housing end piece (17) and **in that** the spring element (28, 40) is pretensioned by securing the housing end piece (17) to the main body (16).

## Revendications

1. Direction assistée électrique pour véhicules automobiles, comprenant un moteur d'entraînement électrique (9) qui est accouplé au moyen d'un mécanisme à recirculation de billes avec une crémaillère (1) déplaçable en direction axiale, pour engendrer une force linéaire, dans laquelle le mécanisme à recirculation de billes comprend un écrou à billes (11) qui est monté dans un palier à roulements (14) avec possibilité de rotation dans un boîtier de direction (15), et dans laquelle le palier à roulements (14) comprend une bague extérieure (31) qui est fixée avec un organe de matière élastique de façon mobile dans le boîtier de direction (15), et l'organe de maintien élastique est un élément à ressort (28, 40) de forme annulaire,
**caractérisée en ce que** l'élément à ressort (28) est réalisé sous forme de rondelle-ressort conique de forme annulaire et s'applique par son petit diamètre contre une surface frontale de la bague extérieure (31), et **en ce que** l'élément à ressort (28, 40) presse la bague extérieure (31) par une force de pressage sur la surface d'appui de manière aussi forte que la coopération à friction engendrée fixe la bague extérieure (31) de manière immobilisée dans son siège (29) en direction radiale sous les conditions de fonctionnement.

2. Direction assistée selon la revendication 1, **caractérisée en ce que** la bague extérieure (31) est appliquée avec la surface frontale détournée de l'élément à ressort (28, 40) contre une surface d'appui (23) du boîtier de direction (15).

3. Direction assistée selon l'une des revendications précédentes, **caractérisée en ce que** la bague extérieure (31) est mise en place dans un siège (29) avec un jeu radial par rapport au boîtier de direction (15).

4. Direction assistée selon l'une des revendications précédentes, **caractérisée en ce que** la bague extérieure (31) est capable de déplacement et/ou de basculement en raison de sollicitations de choc à l'encontre de la force de l'élément à ressort (28, 40) brièvement et de manière irréversible dans son siège en direction radiale et/ou en direction axiale.

5. Direction assistée selon l'une des revendications précédentes, **caractérisée en ce que** l'élément à ressort (28, 40) est appliqué avec sa périphérie extérieure contre une collerette annulaire (23) d'un corps de base (16) du boîtier, la bague extérieure (31) repose dans un siège (29) d'une pièce terminale (17) du boîtier, et **en ce que** l'élément à ressort (28, 40) est précontraint contre le corps de base (16) par la fixation de la pièce terminale (17) du boîtier.
